# EUROPÄISCHE PATENTSCHRIFT

(11) **EP 4 253 244 B1**
(45) Veröffentlichungstag und Bekanntmachung des Hinweises auf die Patenterteilung: **29.10.2025**
(21) Anmeldenummer: 22164648.2
(22) Anmeldetag: 28.03.2022
(51) Int. Cl.: B64D 13/00

(54) **LEITUNGSSYSTEM FÜR EIN LUFTFÖRDERNDES SYSTEM IN EINEM RUMPF EINES LUFTFAHRZEUGS**
CONDUIT SYSTEM FOR AN AIR-CONVEYING SYSTEM IN A FUSELAGE OF AN AIRCRAFT
SYSTÈME DE CONDUITES POUR UN SYSTÈME DE TRANSPORT D'AIR DANS LE FUSELAGE D'UN AVION

(43) Veröffentlichungstag der Anmeldung: 04.10.2023
(73) Patentinhaber: Airbus Operations GmbH, 21129 Hamburg (DE)
(72) Erfinder: Benthien, Hermann, 21129 Hamburg (DE); Leising, Vivien, 21129 Hamburg (DE); Lohmar, Jens, 21129 Hamburg (DE); Zybala, André, 21129 Hamburg (DE); Czudar, Zoltan, 21129 Hamburg (DE)

(56) Entgegenhaltungen:
- FR-A1- 3 103 246
- RU-C2- 2 725 901
- US-A- 5 292 013
- US-A1- 2013 105 067
- US-A1- 2013 119 208

## Beschreibung

### Technisches Gebiet

Die vorliegende Beschreibung betrifft ein Leitungssystem für ein luftförderndes System in einem Rumpf eines Luftfahrzeugs und ein Luftfahrzeug.

### Technischer Hintergrund

Die Installation von Leitungen in einem Rumpf eines Luftfahrzeugs ist aufwändig und zeitintensiv, da Leitungen in dedizierten Haltern angebracht werden müssen. Verschiedene Leitungen sind in einem ausreichenden Abstand zueinander zu führen, um einen Kontakt zwischen ihnen und der Struktur zu vermeiden. Oftmals ist die Installationsumgebung beengt. Eine individuelle Ausstattung des betreffenden Luftfahrzeugs erfordert zudem eine Konzeption und Fertigung individueller Leitungen und Halter.

US 2013/119208 A1 offenbart eine verbesserte Montagevorrichtung zum sicheren Halten von länglichen Gegenständen auf einer Oberfläche.

RU 2 725 901 C2 offenbart eine Vorrichtung zum Rückwärtsschutz eines starren Luftschiffkörpers beim Parken, dadurch gekennzeichnet, dass zwischen den Gassäcken und der Außenhaut des Luftschiffs Luftkanäle zur Warmluftzufuhr eingebaut sind.

### Beschreibung

Es kann als Aufgabe betrachtet werden, ein alternatives Leitungssystem zur Installation in einem Rumpf eines Luftfahrzeugs vorzuschlagen, bei dem eine raschere, kostengünstigere und zudem flexiblere Installation erreichbar ist und die hierdurch realisierten Luftleitungen ein möglichst geringes Gewicht aufweisen.

Die Aufgabe wird gelöst durch ein Leitungssystem für ein luftförderndes System in einem Rumpf eines Luftfahrzeugs mit den Merkmalen des unabhängigen Anspruchs 1. Vorteilhafte Ausführungsformen und Weiterbildungen der Erfindung sind den Unteransprüchen und der nachfolgenden Beschreibung zu entnehmen.

Es wird ein Leitungssystem für ein luftförderndes System in einem Rumpf eines Luftfahrzeugs vorgeschlagen, aufweisend mindestens eine biegeschlaffe, zugfeste, schlauchartige und luftdichte Hülle aus einem stoffartigen Material zum Leiten von Luft, und mindestens eine Halteeinrichtung zum Befestigen der mindestens einen Hülle an einer Struktur des Rumpfs, wobei die Halteeinrichtung einen mit einer Struktur des Rumpfs verbindbaren strukturfesten Abschnitt und einen mit der mindestens einen Hülle verbindbaren hüllenfesten Abschnitt aufweist, wobei der strukturfeste Abschnitt einen Innenquerschnitt aufweist, der zumindest teilweise mit einem Außenquerschnitt des hüllenfesten Abschnitts korrespondierend geformt ist, sodass der Außenquerschnitt zumindest teilweise in den Innenquerschnitt einschieb- oder einsteckbar ist, und wobei das Leitungssystem dazu ausgebildet ist, Luft von einer Quelle druckbeaufschlagter Luft durch einen Innenraum der mindestens einen Hülle zu leiten.

Die biegeschlaffe, zugfeste und schlauchartige Hülle dient als Ersatz einer im Stand der Technik üblichen starren Luftleitung. Die Hülle könnte mittels einer länglichen Stoffbahn hergestellt sein, deren Längskanten einander überlappend verbunden sind. Es bietet sich an, eine gleichbleibende Form der Hülle zu realisieren, bei der eine Mantelfläche der Hülle sich entlang ihrer Länge nicht verändert. Die mindestens eine Hülle ist dazu vorgesehen, entlang eines dafür vorgesehenen Installationsbereichs des Rumpf angeordnet zu werden. Ein oftmals verwendeter Installationsbereich könnte der sogenannte Dreiecksbereichs sein, der unterhalb einer Flugzeugkabine randseitlich unter dem Kabinenfußboden zwischen einer Wandung eines Frachtraums und der Rumpfwandung angeordnet ist. Dort sind üblicherweise mehrere pneumatische Leitungen vorgesehen sein, die einem Klimatisierungssystem zugeordnet sind.

Die mindestens eine Hülle führt einerseits zum Einsparen von Gewicht. Andererseits erlaubt die Verwendung des biegeschlaffen, stoffartigen Materials eine durchgehende Ausführung mit einer signifikanten Länge und eine einfache Installierbarkeit. Aufgrund ihrer mechanischen Eigenschaften kann sie sehr leicht an strukturellen Hindernissen vorbeigeführt werden. Zur Installation kann die mindestens eine Hülle aufgerollt vorliegen und wird anschließend während der Befestigung innerhalb des Rumpfs nach und nach abgerollt. Das Leitungssystem kann folglich außerhalb des Rumpfs weitgehend vollständig hergestellt werden, um dann rasch in dem Rumpf befestigt zu werden. Zudem können sehr leicht individuelle Anordnungen von Luftleitungen realisiert werden, indem eine oder mehrere zusätzliche Hüllen vorgesehen oder weggelassen werden.

Die Halteeinrichtung dient der Befestigung der mindestens einen Hülle an dem Rumpf. Sie weist hierzu den strukturfesten Abschnitt und den hüllenfesten Abschnitt auf, die miteinander verbindbar sind. Sie sind separat zueinander ausgeführt, sodass die Hülle mit daran angeordnetem hüllenfesten Abschnitt der Halteeinrichtung mit dem strukturfesten Abschnitt der Halteeinrichtung verbindbar ist. Der strukturfeste Abschnitt erstreckt sich entlang der vorgesehenen Länge der mindestens einen Hülle in dem Rumpf. Hierzu könnte ein durchgehender oder bevorzugt mehrere einzelne, voneinander beabstandete Halter vorgesehen sein, die entlang einer Erstreckungsachse verteilt sind und den hüllenfesten Abschnitt aufnehmen.

Zur Erleichterung der Montage bieten sich unterschiedliche Prinzipien der Befestigung an. In einer Variante wäre etwa denkbar, den hüllenfesten Abschnitt zumindest so biegefest auszugestalten, dass die mindestens eine Hülle zumindest entlang einer Teillänge des Rumpfs in den strukturfesten Abschnitt einschieb- oder darin durchschiebbar ist. In einer anderen Variante könnte der mindestens eine Träger manuell entlang der gewünschten Teillänge positioniert werden, um anschließend den hüllenfesten Abschnitt in den strukturfesten Abschnitt radial von außen einzustecken oder einzurasten, oder auf andere Art darin zu befestigen.

Es ist weiterhin bevorzugt, dass die mindestens eine Hülle an der Struktur des Rumpfes zumindest in radialer Richtung aufgespannt wird, sodass sich die Lage und Ausrichtung des Querschnitts räumlich auch beim Betrieb des Luftfahrzeugs im Wesentlichen nicht ändert. Hierzu könnten mehrere Halteeinrichtungen vorgesehen sein, die die mindestens eine Hülle an mehreren Seiten, bevorzugt in zwei einander entgegengesetzte radiale Richtungen oder in drei radial verteilte Richtungen zu verspannen.

In einer vorteilhaften Ausführungsform weist das System mehrere Hüllen auf, die an Seitenflächen miteinander verbunden sind und jeweils einen separaten Innenraum aufweisen. Die Verwendung mehrerer Hüllen führt zu einer Struktur aus parallel zueinander angeordneten Hüllen mit jeweils einem länglichen Innenraum, in dem Luft geleitet werden kann. Da die Innenräume zweier benachbarter Träger voneinander separiert sind, sind die dadurch ausgebildeten Leitungen ebenfalls voneinander getrennt. Hierdurch erübrigen sich zusätzliche Vorkehrungen, um eine entsprechende Segregation zu erreichen. Eine individuelle Halterung für jede einzelne, durch eine Hülle realisierte Leitung erübrigt sich und der Arbeitsaufwand für die Installation mehrerer Leitungen im Vergleich zum Stand der Technik reduziert sich dadurch deutlich.

In einer vorteilhaften Ausführungsform weist der hüllenfeste Abschnitt mindestens einen Keder auf, der in dem strukturfesten Abschnitt halterbar ist. Der Keder ist ein längliches Element, das mit der mindestens einen Hülle koppelbar ist und sich dann zumindest teilweise parallel zu der Haupterstreckungsachse der mindestens einen Hülle erstreckt. Der Keder kann in einen als Kederschiene ausgebildeten strukturfesten Abschnitt oder in mehrere, aufeinanderfolgende und korrespondierend geformte Halter eingebracht werden, die den Keder zangenartig umgreifen. Der Keder könnte mit einer Stirnseite in den strukturfesten Abschnitt eingeführt und anschließend der Länge nach in einen Innenquerschnitt des strukturfesten Abschnitts eingeschoben werden. Der Keder weist bevorzugt einen runden und insbesondere kreisförmigen Querschnitt auf, an dessen Umfang sich mindestens einseitig zumindest eine Bahn eines flachen Materials anschließt. Wird der Keder in den Innenquerschnitt des strukturfesten Abschnitts eingebracht, wird er darin formschlüssig gehalten, wobei die zumindest eine Bahn dann - je nach Ausführung des strukturfesten Abschnitts - durch einen oder mehrere Schlitze aus dem strukturfesten Abschnitt herausragt. Der Schlitz ist dabei derart dimensioniert, dass der Keder durch den Schlitz nicht aus dem Innenquerschnitt herausrutschen kann. Die zumindest eine Bahn kann eine Zugkraft aufnehmen, die durch den Keder in den strukturfesten Abschnitt übertragen wird. Der Keder kann aus einem Kunststoff und/oder einem gummiartigen Material bestehen.

In einer vorteilhaften Ausführungsform weist der strukturfeste Abschnitt mehrere Halter auf, die dazu ausgebildet sind, den hüllenfesten Abschnitt zumindest bereichsweise zangenartig zu umgreifen. Die Halter könnten hierzu zwei einander gegenüberliegende und voneinander beabstandete Haltearme aufweisen, die einen Innenquerschnitt zwischen sich definieren. Zum Haltern des vorangehend exemplarisch genannten Keders oder eines anderen Teils des hüllenfesten Abschnitts könnten die beiden Haltearme an ihren Enden einen Abstand zueinander aufweisen, durch den die zumindest eine Bahn von dem Keder aus dem Innenquerschnitt nach außen ragen kann. Der Abstand der Enden der beiden Haltearme zueinander ist dabei jedoch deutlich geringer als die Breite des Innenquerschnitts, um das Herauslösen des Keders zu vermeiden. Der Abstand könnte etwa höchstens 50% der Breite des Innenquerschnitts betragen.

In einer vorteilhaften Ausführungsform weist der strukturfeste Abschnitt mehrere Halter auf, die als längliche Hülsen ausgeführt sind und seitlich in Längsrichtung geschlitzt sind. Dies erlaubt das einfache Einschieben des hüllenfesten Abschnitts, besonders bevorzugt bei einer Ausführung als Keder.

In einer vorteilhaften Ausführungsform weist der strukturfeste Abschnitt mehrere Halter auf, die jeweils eine Kugellagerführung aufweisen. Beispielsweise könnte an Innenflächen des Innenquerschnitts der Halter mehrere Kugeln angeordnet und drehbar gelagert sein, sodass der hüllenfeste Abschnitt mit besonders geringem Widerstand durch den strukturfesten Abschnitt führbar ist. Damit kann eine rasche und einfache Installation gewährleistet werden.

In einer vorteilhaften Ausführungsform weist mindestens einer der Halter einen trichterförmigen Einlaufbereich zum Einführen eines Keders auf. Durch den trichterförmigen Einlauf wird die Installation erleichtert, da der hüllenfeste Abschnitt und der strukturfeste Abschnitt nicht besonders genau zueinander ausgerichtet werden müssen. Weist der strukturfeste Abschnitt eine Vielzahl von Haltern in einem Abstand zueinander aufweisen, kann bevorzugt der erste Halter einen solchen Einlaufbereich umfassen. Weiter nachfolgende Halter können je nach Abstand der Halter zueinander ebenso mit einem trichterförmigen Einlauf ausgestattet sein.

In einer vorteilhaften Ausführungsform weist der mindestens eine hüllenfeste Abschnitt mindestens ein Verbindungsstück auf, das sich von einem mit dem strukturfesten Abschnitt verbindbaren Teil des hüllenfesten Abschnitts zu der mindestens einen Hülle erstreckt. Das Verbindungsstück erlaubt eine Platzierung des strukturfesten Abschnitts in einem Abstand von der mindestens einen Hülle. Die mindestens eine Hülle ist an einer Stelle platzierbar, an der sich nicht unmittelbar strukturfeste Halter anordnen lassen. Das mindestens eine Verbindungsstück erlaubt zudem das Aufbringen einer Zugkraft aus einer vorbestimmten Richtung, wobei die Richtung durch die Ausrichtung und Anordnung des mindestens einen Verbindungsstücks sowie des strukturfesten Abschnitts bestimmt wird.

In einer vorteilhaften Ausführungsform ist das mindestens Verbindungsstück aus einem biegeschlaffen, stoffartigen Material ausgebildet, sodass die mindestens eine Hülle im montierten Zustand in einem Abstand zu dem strukturfesten Abschnitt befestigbar und verspannbar ist. Es ergibt sich folglich eine Art Vorhang, an dem sich eine oder mehrere Hüllen befinden. Das mindestens eine Verbindungsstück ist bevorzugt aus demselben Material hergestellt wie die mindestens eine Hülle. Neben einem einzelnen oder mehreren, durchgehenden, bahnförmigen Verbindungsstücken könnten auch mehrere aufeinanderfolgende Verbindungsstücke vorgesehen sein, die einen Abstand zueinander einschließen. Jedes Verbindungsstück könnte etwa als Lasche oder Band ausgebildet sein. Das mindestens eine Verbindungsstück kann mit der mindestens einen Hülle vernäht, verschweißt und/oder verklebt sein.

In einer vorteilhaften Ausführungsform umfasst das stoffartige Material ein gewebtes Textil. Das Textil könnte insbesondere aus einem feuerfesten oder feuerhemmenden Material ausgebildet sein. Es können sich hierfür Textile aus geeigneten Kunststofffasern anbieten, wie etwa Aramidfasern. Zum Erreichen einer ausreichenden Luftdichtheit könnte eine entsprechende Beschichtung und/oder eine bestimmte Verzwirnung des Materials der mindestens einen Hülle vorgesehen sein.

In einer vorteilhaften Ausführungsform weist die mindestens eine Hülle eine thermische Isolation auf. Die thermische Isolation könnte durch ein zusätzlich aufgetragenes Material in dem Innenraum der mindestens einen Hülle erreicht werden. Dies kann durch Anordnung eines isolierenden Materials an einer Innenfläche des Innenraums der betreffenden Hülle sein. Das Material der mindestens einen Hülle könnte jedoch auch stärker bzw. mehrlagig ausgeführt sein. Alternativ könnten auch eine Innenhülle und eine Außenhülle verwendet werden, die einen Abstand zueinander aufweisen.

In einer vorteilhaften Ausführungsform ist der mindestens eine Träger weiterhin elektrisch nicht leitfähig.

In einer vorteilhaften Ausführungsform weist das System ferner mindestens ein Anschlussstück auf, das mit einer Öffnung in einer Seitenfläche der mindestens einen Hülle verbindbar ist und sich quer zu einer Haupterstreckungsachse der mindestens einen Hülle erstreckt. Das Anschlussstück erstreckt sich quer zu der Haupterstreckungsachse, um bedarfsweise eine Zweigleitung von einer Hülle herauszuführen. Das betreffende Anschlussstück könnte sich in eine zu der Kabine gewandte Richtung oder eine von der Kabine abgewandte Richtung erstrecken.

An dieser Stelle sei erwähnt, dass das Leitungssystem vollständig außerhalb des Rumpfes vorgefertigt werden kann, um dann anschließend in den Rumpf zur dortigen Installation geführt werden kann. Dies ist insbesondere dann von Vorteil, wenn mehrere Hüllen miteinander verbunden sind, um einen Strang von Luftleitungen auszubilden. Der hüllenfeste Abschnitt der mindestens einen Halteeinrichtung könnte dann ebenso an der mindestens einen Hülle angeordnet sein, wie auch etwaige Anschlussstücke, die zur Anbindung der mindestens einen Hülle an andere, im Rumpf installierte Leitungen dienen. Das Leitungssystem kann aufgrund der Verwendung biegeweicher oder biegeschlaffer Komponenten aufgerollt, gefaltet oder auf andere Art kompaktiert in den Rumpf gebracht und dort entfaltet und installiert werden.

Die Erfindung betrifft weiterhin ein Luftfahrzeug, aufweisend einen Rumpf mit einer Struktur und mindestens ein Leitungssystem nach der vorhergehenden Beschreibung, wobei die mindestens eine Hülle an der Struktur des Luftfahrzeugs befestigt ist.

In einer vorteilhaften Ausführungsform bildet die mindestens eine Hülle eine Luftleitung eines Klimatisierungssystems.

Es ist denkbar, zumindest eine der mindestens einen Hülle mit einer Versteifungsstruktur auszustatten, sollte damit eine Luftleitung gebildet werden, die mit einem Unterdruck beaufschlagt wird. Die Versteifungsstruktur könnte mit einzelnen, ringförmigen Drähten oder einem spiralförmigen Draht realisiert werden.

Zum besseren technischen Verständnis ist ferner ein Verfahren zur Installation von Luftleitungen in einem Luftfahrzeug vorgesehen, aufweisend das Anordnen eines strukturfesten Abschnitts mindestens einer Halteeinrichtung an einem Installationsort einer Struktur eines Rumpfs des Luftfahrzeugs, das Anordnen mindestens einer biegeschlaffen, zugfesten, schlauchartigen und luftdichten Hülle aus einem stoffartigen Material zum Leiten von Luft an dem Installationsort, wobei die mindestens eine Hülle mindestens einen hüllenfesten Abschnitt der mindestens einen Halteeinrichtung aufweist, und das Verbinden des hüllenfesten Abschnitts mit dem strukturfesten Abschnitt.

In einem Beispiel umfasst das Verbinden des hüllenfesten Abschnitts mit dem strukturfesten Abschnitt das Einschieben eines an dem mindestens einen hüllenfesten Abschnitt angeordneten Keders in einen Innenquerschnitt mindestens eines Halters.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung zweier Leitungssysteme in einem Rumpf eines Luftfahrzeugs gemäß einem Ausführungsbeispiel.
- Fig. 2: eine schematische Darstellung eines Leitungssystems gemäß einem weiteren Ausführungsbeispiel.
- Fig. 3: eine schematische vergrößerte Darstellung von Halteeinrichtungen.
- Fig. 4: einen schematischen Vergleich zwischen Luftleitungen im Stand der Technik und gemäß einem Ausführungsbeispiel.
- Fig. 5: eine schematische Ansicht einer Anordnung von Luftleitungen, von denen eine thermisch isoliert ist gemäß einem Ausführungsbeispiel.
- Fig. 6: eine schematische Ansicht einer Anordnung von Luftleitungen im Betrieb gemäß einem Ausführungsbeispiel.
- Fig. 7: eine schematische Ansicht einer Anordnung von Luftleitungen im Betrieb gemäß einem Ausführungsbeispiel.
- Fig. 8: schematische Ansichten eines Halters gemäß einem Ausführungsbeispiel.
- Fig. 9: schematische Ansichten eines Halters nach Fig. 8 mit darin angeordnetem Keder gemäß einem Ausführungsbeispiel.
- Fig. 10: eine schematische Ansicht von Luftleitungen mit Anschlussstücken.
- Fig. 11: ein Luftfahrzeug.

### Detaillierte Beschreibung von Ausführungsbeispielen

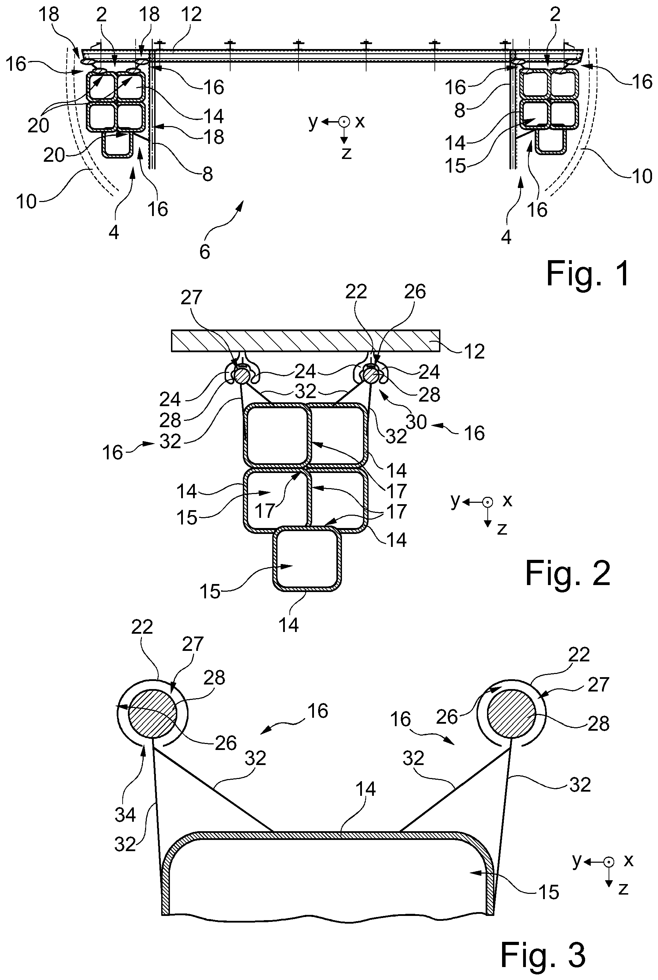

Fig. 1 zeigt in einer Schnittdarstellung quer zu einer Längsachse eines Rumpfs 6 eines Luftfahrzeugs zwei Leitungssysteme 2, die jeweils in einem Dreiecksbereich 4 des Rumpfs 6 angeordnet sind. Der Dreiecksbereich 4 befindet sich dabei zwischen einer Frachtraumwandung 8 und eine Rumpfwandung 10 unterhalb einer Fußbodenstruktur 12. Beide Leitungssysteme 2 sind hier symmetrisch ausgestaltet und jeweils einer Hälfte einer oberhalb der Fußbodenstruktur 12 angeordneten Kabine zugeordnet.

Jedes Leitungssystem 2 weist mehrere Hüllen 14 auf, die aus einem biegeschlaffen und zugfesten Material schlauchartig und luftdicht ausgeführt sind. Jede Hülle 14 weist einen eigenen, abgeschlossenen Innenraum 15 auf, der als Luftleitung fungiert. In diesem Beispiel sind insgesamt fünf Hüllen 14 zu einer beispielhaft spiegelsymmetrischen Anordnung an zueinander gewandten Seitenflächen 17 miteinander verbunden. Die einzelnen Hüllen 14 können dazu miteinander verklebt, verschweißt oder vernäht sein. Alternativ oder zusätzlich dazu könnten sie auch durch umlaufende Bänder oder ähnliches zusammengehalten werden. Die Größen der einzelnen Hüllen 14 sind lediglich exemplarisch identisch, sie können durchaus auch völlig voneinander abweichen. Es versteht sich, dass sich die Hüllen 14 vertikal zu der Zeichnungsebene über einen wesentlichen Teil der Rumpflänge erstrecken.

Die Anordnung der Hüllen 14 ist mittels mehrerer Halteeinrichtungen 16 an der Fußbodenstruktur 12 und der Frachtraumwandung 8 gehaltert. Hierzu weist jede der Halteeinrichtungen 16 einen strukturfesten Abschnitt 18 und einen hüllenfesten Abschnitt 20 auf, die miteinander verbindbar sind. Die Halteeinrichtungen 16 sind entlang der Länge der Hüllen 14 in dem Rumpf 6 angeordnet. In diesem Beispiel befinden sich zwei Halteeinrichtungen 16 an einer Oberseite der Hüllen 14 und sind in Querrichtung voneinander beabstandet. Eine dritte Halteeinrichtung 16 befindet sich an einer Unterseite der Hüllen 14 und ist mit der Frachtraumwandung 8 verbunden. Durch die Befestigung an drei radial um die Anordnung der Hüllen 14 herum verteilten Stellen ergibt sich eine Verspannung, die die Hüllen 14 an ihrem Installationsort hält. Die Verspannung ist dabei derart zu bemessen, dass ein Beaufschlagen der Hüllen 14 mit einem Luftdruck nicht zu einer übermäßigen, erzwungenen Zugspannung an den Seitenflächen der Hüllen 14 führt.

Das Koordinatensystem zeigt flugzeugfeste Achsen x, y und z. Die Hüllen 14 erstrecken sich beispielhaft parallel zu der x-Achse, d.h. der Längsachse des Luftfahrzeugs.

In Fig. 2 ist eines der beiden Leitungssysteme 2 in einer vergrößerten Darstellung gezeigt. Die Halteeinrichtungen 16 weisen hier jeweils mehrere Halter 22 auf, die an der Fußbodenstruktur 12 angeordnet sind. Die Halter 22 weisen zwei einander gegenüberliegende Haltearme 24 auf, die einen Innenquerschnitt 26 einschließen. Hier ist ein Keder 28 eingebracht, der einen runden und bevorzugt kreisrunden Außenquerschnitt 27 aufweist und formschlüssig mit den Haltern 22 durch Anordnung in dem Innenquerschnitt 26 verbindbar ist. Sind die Halter 22 parallel zu einer Längsachse des Flugzeugrumpf 6 verteilt, können die Keder 28 parallel zu der Längsachse in die Halter 22 eingeschoben und durchgeschoben werden. Durch einen Zwischenraum 30 zwischen den beiden Haltearmen 24 ragen Verbindungsstücke in Form von einzelnen, bevorzugt entlang der Erstreckungsrichtung der Hüllen 14 gleichmäßig verteilten Bändern 32, die mit dem Keder 28 und den Hüllen 14 verbunden sind.

In Fig. 3 wird ein Keder 28 in einem Halter 22 dargestellt, wobei der Halter 22 hier ein hülsenartige Form umfasst, an der ein Schlitz 34 vorgesehen ist, durch den sich die Bänder 32 von dem Keder 28 nach außen erstrecken können. Diese Ausführung der Halter 22 ist besonders einfach herzustellen und entspricht im Wesentlichen einer segmentierten Kederschiene. Die Montage der Hüllen 14 ist dadurch besonders einfach.

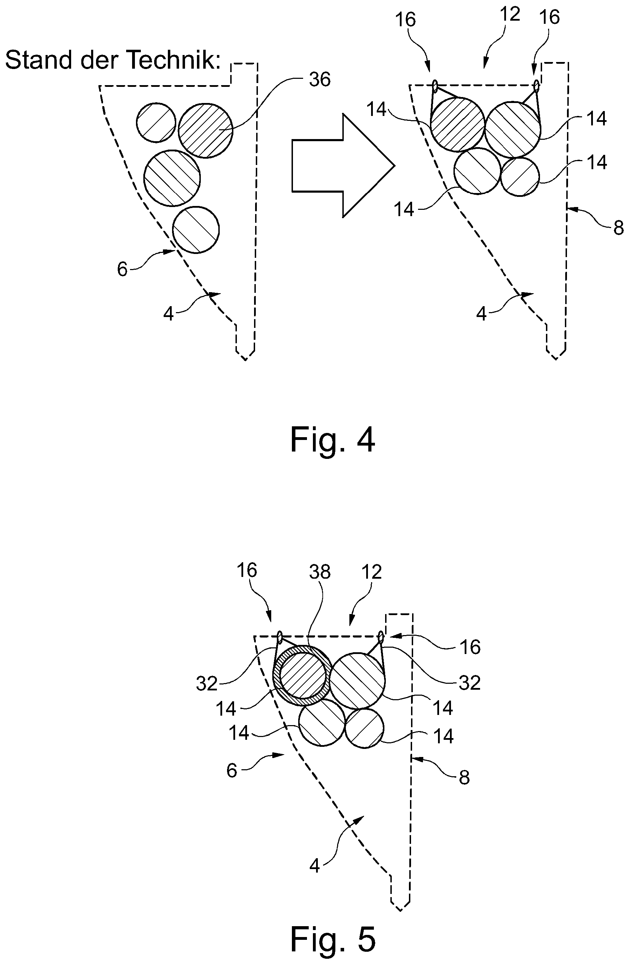

Wie aus der Fig. 4 deutlich wird, liegt ein besonderer Vorteil des Leitungssystems 2 darin, dass statt herkömmlicher Luftleitungen 36, die in einem Dreiecksbereich 4 mit größeren Abständen zueinander und einer Vielzahl von verschiedenen Haltern installiert sind, erfindungsgemäß durch die Hüllen 14 eine deutlich kompaktere Ausführung realisierbar sind. Die Kombination mehrerer Leitungen in Form mehrerer Hüllen 14 führt zu einer örtlichen Konzentration der Leitungsquerschnitte. Es können zahlreiche Halter eingespart und durch die Halteeinrichtungen 16 ersetzt werden, die sich überdies an wenigen Stellen der Struktur konzentrieren können. Da die Hüllen 14 nicht miteinander kollidieren können und zudem bei Druckbeaufschlagung biegeweich sind, ist keine zusätzliche Separation der Luftleitungen voneinander erforderlich. Ein geringes Gewicht und ein geringer Bauraum sind die Folge.

Wie in Fig. 5 angedeutet ist, können einzelne Hüllen 14 zusätzlich auch eine thermische Isolation 38 aufweisen. Hierzu könnte die jeweilige Hülle 14 an ihrer Innenseite oder an ihrer Außenseite mit einem entsprechenden Material ausgestattet und/oder mehrlagig ausgeführt werden. Das thermisch isolierende Material könnte etwa ein offenzelliger Schaumstoff sein.

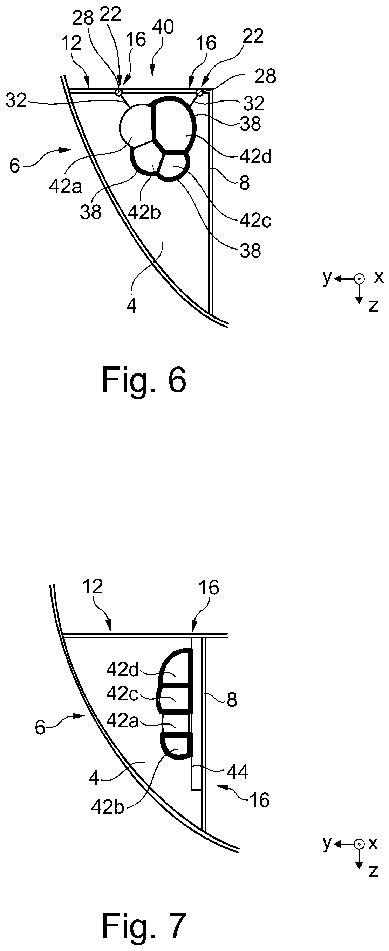

In Fig. 6 wird ein weiteres Beispiel eines Leitungssystems 40 gezeigt, bei dem mehrere Hüllen 42 eingesetzt werden, die zur Unterscheidung mit den Bezugszeichen 42a, 42b, 42c und 42d gekennzeichnet werden. Die Hüllen 42a-42d weisen beispielhaft unterschiedliche Querschnitte auf und sind damit für unterschiedliche Luftmassenströme angepasst. Die Hülle 42a könnte etwa ohne eine zusätzliche thermische Isolierung ausgebildet sein und der optionalen Frachtraumbelüftung dienen. Die Hülle 42b weist eine thermische Isolierung 38 auf und ist beispielsweise einer Cockpitbelüftung zugeordnet. Die Hülle 42c könnte der Belüftung oder Klimatisierung eines Avionik-Compartments dienen. Die Hülle 42d, welche den größten Querschnitt und einer thermischen Isolierung aufweist, könnte für eine Kabinenbelüftung vorgesehen sein und mit mehreren Zweigleitungen verbunden werden, die zu Kabinenluftauslässen führen. Alle Hüllen 42a bis 42d könnten mit unterschiedlichen Drücken beaufschlagt werden. Durch ihr zugfestes Material können sich die Hüllen 42a bis 42d zwar verformen, die Größen ihrer jeweiligen Mantelflächen bleiben jedoch konstant.

Fig. 7 zeigt die Anordnung von Hüllen 42a, 42b, 42c und 42d in einer alternativen Anordnung. Hier ist ein Verbindungsstück 44 vorgesehen, das als flächige Bahn ausgeführt ist und zwischen oberen Halteeinrichtungen 16 und unteren Halteeinrichtungen 16 verspannt ist.

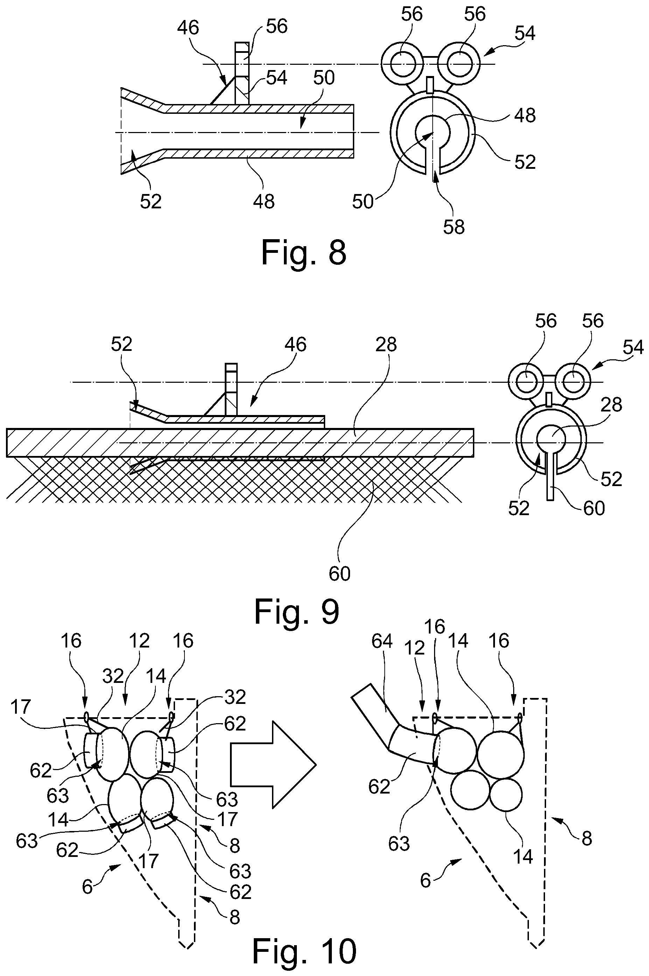

Fig. 8 zeigt einen Halter 46, der einen Hülsenabschnitt 48 aufweist, welcher einen Innenquerschnitt 50 umfasst. Ein trichterförmiger Einlaufbereich 52 ist vorgesehen, der das Einschieben eines Keders erleichtert. Angrenzend an den hülsenförmigen Abschnitt 48 ist ein Aufnahmeabschnitt 54 vorgesehen, der zum Befestigen des Halter 46 an einer Struktur des Rumpfs 6 dient. Hierzu könnte der Aufnahmeabschnitt 54 mehrere Bohrungen 56 aufweisen. Analog zu Fig. 2 und 3 ist hier ein Schlitz 58 vorgesehen, durch den sich ein mit dem Keder verbundenes Verbindungsstück nach außen erstrecken kann, um die Hüllen 14 zu tragen.

Dies ist in Fig. 9 dargestellt. Hier ist ein Keder 28 gezeigt, welcher durch den trichterförmigen Einlaufbereich 52 in den Halter 46 eingeschoben ist. Ein Verbindungsstück kann sich durch den Schlitz 58 aus dem Innenquerschnitt 50 nach außen erstrecken.

Zum Anschließen der einzelnen Hüllen 14 bzw. 42 sind Anschlussstücke 62 vorgesehen, die mit einer Öffnung 63 der jeweiligen Hüllen 14 bzw. 42 in einer Seitenfläche 17 verbunden sind. Ein Anschlussstück 62 ist ebenso als eine schlauchartige Hülle ausführbar, könnte indes auch als herkömmliche, starre Leitung ausgeführt sein. Fig. 10 zeigt in der linken Seite vier Hüllen 42a bis 42d mit jeweils einem daran angeordneten Anschlussstück 62. Auf der rechten Seite der Fig. 10 wird ein einzelnes Anschlussstück 62 gezeigt, das mit einer Steigleitung 64 verbunden ist und könnte mit einem Luftauslass in einer Kabine des Luftfahrzeugs gekoppelt sein.

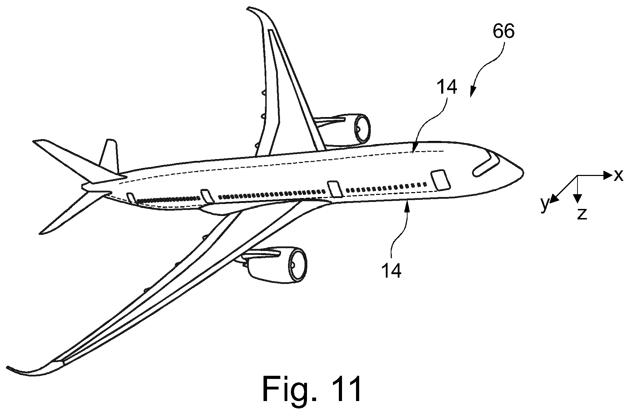

Schließlich zeigt Fig. 11 ein Luftfahrzeug 66. Hier kann ein Leitungssystem 2 oder 40 installiert sein, sodass beispielsweise randseitlich unterhalb der Fußbodenstruktur Hüllen 14 als Luftleitungen angeordnet sind, die sich parallel zu einer Längsachse x des Luftfahrzeugs 66 erstrecken.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Leitungssystem
- 4: Dreiecksbereich
- 6: Rumpf
- 8: Frachtraumwandung / Struktur
- 10: Rumpfwandung
- 12: Fußbodenstruktur / Struktur
- 14: Hülle
- 16: Halteeinrichtung
- 17: Seitenfläche
- 18: strukturfester Abschnitt
- 20: hüllenfester Abschnitt
- 22: Halter
- 24: Haltearm
- 26: Innenquerschnitt
- 27: Außenquerschnitt
- 28: Keder
- 30: Zwischenraum
- 32: Verbindungsstück / Band
- 34: Schlitz
- 36: Luftleitung (Stand der Technik)
- 38: thermische Isolation
- 40: Leitungssystem
- 42: Hülle
- 44: Verbindungsstück
- 46: Halter
- 48: Hülsenabschnitt
- 50: Innenquerschnitt
- 52: trichterförmige Einlaufbereich
- 54: Aufnahmeabschnitt
- 56: Bohrung
- 58: Schlitz
- 60: Verbindungsstück
- 62: Anschlussstück
- 63: Öffnung
- 64: Steigleitung
- 66: Luftfahrzeug

## Patentansprüche

1. Leitungssystem (2, 40) für ein luftförderndes System in einem Rumpf (6) eines Luftfahrzeugs (66), aufweisend:
- mindestens eine biegeschlaffe, zugfeste, schlauchartige und luftdichte Hülle (14, 42) aus einem stoffartigen Material zum Leiten von Luft, und
- mindestens eine Halteeinrichtung (16) zum Befestigen der mindestens einen Hülle (14, 42) an einer Struktur (8, 12) des Rumpfs (6),
wobei die Halteeinrichtung (16) einen mit der Struktur (8, 12) des Rumpfs (6) verbindbaren strukturfesten Abschnitt (18) und einen mit der mindestens einen Hülle (14, 42) verbindbaren hüllenfesten Abschnitt (20) aufweist,
wobei der strukturfeste Abschnitt (18) einen Innenquerschnitt (26) aufweist, der zumindest teilweise mit einem Außenquerschnitt (27) des hüllenfesten Abschnitts (20) korrespondierend geformt ist, sodass der Außenquerschnitt (27) zumindest teilweise in den Innenquerschnitt (26) einschieb- oder einsteckbar ist,
und
wobei das Leitungssystem (2, 40) dazu ausgebildet ist, Luft von einer Quelle druckbeaufschlagter Luft durch einen Innenraum (15) der mindestens einen Hülle (14, 42) zu leiten.

2. Leitungssystem (2, 40) nach Anspruch 1,
aufweisend mehrere Hüllen (14, 42), die an Seitenflächen (17) miteinander verbunden sind und jeweils einen separaten Innenraum (15) aufweisen.

3. Leitungssystem (2, 40) nach Anspruch 1 oder 2,
wobei der hüllenfeste Abschnitt (20) mindestens einen Keder (28) aufweist, der in dem strukturfesten Abschnitt (18) halterbar ist.

4. Leitungssystem (2, 40) nach einem der vorhergehenden Ansprüche,
wobei der strukturfeste Abschnitt (18) mehrere Halter (22, 46) aufweist, die dazu ausgebildet sind, den hüllenfesten Abschnitt (20) zumindest bereichsweise zangenartig zu umgreifen.

5. Leitungssystem (2, 40) nach einem der vorhergehenden Ansprüche,
wobei der strukturfeste Abschnitt (18) mehrere Halter (22, 46) aufweist, die als längliche Hülsen ausgeführt sind und seitlich in Längsrichtung geschlitzt sind.

6. Leitungssystem (2, 40) nach Anspruch 5,
wobei mindestens einer der Halter (22, 46) einen trichterförmigen Einlaufbereich (52) zum Einführen eines Keders (28) aufweist.

7. Leitungssystem (2, 40) nach einem der vorhergehenden Ansprüche,
wobei der mindestens eine hüllenfeste Abschnitt (20) mindestens ein Verbindungsstück (32, 44, 60) aufweist, das sich von einem mit dem strukturfesten Abschnitt (18) verbindbaren Teil des hüllenfesten Abschnitts (20) zu der mindestens einen Hülle (14, 42) erstreckt.

8. Leitungssystem (2, 40) nach Anspruch 7,
wobei das Verbindungsstück (32, 44, 60) aus einem biegeschlaffen, stoffartigen Material ausgebildet ist, sodass die mindestens eine Hülle (14, 42) im montierten Zustand in einem Abstand zu dem strukturfesten Abschnitt (18) befestigbar und verspannbar ist.

9. Leitungssystem (2, 40) nach einem der vorhergehenden Ansprüche,
wobei das stoffartige Material ein gewebtes Textil oder textilartiges Material umfasst.

10. Leitungssystem (2, 40) nach einem der vorhergehenden Ansprüche,
wobei die mindestens eine Hülle (14, 42) eine thermische Isolation (38) aufweist.

11. Leitungssystem (2, 40) nach einem der vorhergehenden Ansprüche,
ferner aufweisend mindestens ein Anschlussstück (62), das mit einer Öffnung (63) in einer Seitenfläche (17) der mindestens einen Hülle (14, 42) luftdicht verbindbar ist und sich quer zu einer Haupterstreckungsachse der mindestens einen Hülle (14, 42) erstreckt.

12. Luftfahrzeug (66), aufweisend einen Rumpf (6) mit einer Struktur (8, 12) und mindestens ein Leitungssystem (2, 40) nach einem der vorhergehenden Ansprüche, wobei die mindestens eine Hülle (14, 42) an der Struktur (8, 12) des Luftfahrzeugs (66) befestigt ist.

13. Luftfahrzeug (66) nach Anspruch 12, wobei die mindestens eine Hülle (14, 42) eine Luftleitung eines Klimatisierungssystems bildet.

## Claims

1. Duct system (2, 40) for an air conveying system in a fuselage (6) of an aircraft (66), comprising:
- at least one flexible, tensile, hose-like and airtight envelope (14, 42) made of a fabric-like material for guiding air, and
- at least one holding device (16) for fastening the at least one envelope (14, 42) to a structure (8, 12) of the fuselage (6),
- wherein the holding device (16) has a structure-fixed section (18) connectable to the structure (8, 12) of the fuselage (6) and an envelope-fixed section (20) connectable to the at least one envelope (14, 42),
- wherein the structure-fixed section (18) has an inner cross-section (26) that is at least partially correspondingly shaped to an outer cross-section (27) of the envelope-fixed section (20), so that the outer cross-section (27) can be at least partially slid or inserted into the inner cross-section (26), and
- wherein the duct system (2, 40) is configured to guide air from a source of pressurized air through an inner space (15) of the at least one envelope (14, 42).

2. Duct system (2, 40) according to Claim 1, comprising several envelopes (14, 42) that are connected to each other at side surfaces (17) and each have a separate inner space (15).

3. Duct system (2, 40) according to Claim 1 or 2, wherein the envelope-fixed section (20) has at least one bead (28) that can be held in the structure-fixed section (18).

4. Duct system (2, 40) according to one of the preceding claims, wherein the structure-fixed section (18) has several holders (22, 46) that are configured to embrace the envelope-fixed section (20) at least partially in a tong-like manner.

5. Duct system (2, 40) according to one of the preceding claims, wherein the structure-fixed section (18) has several holders (22, 46) that are designed as elongated sleeves and are slotted laterally in the longitudinal direction.

6. Duct system (2, 40) according to Claim 5, wherein at least one of the holders (22, 46) has a funnel-shaped inlet area (52) for inserting a bead (28).

7. Duct system (2, 40) according to one of the preceding claims, wherein the at least one envelope-fixed section (20) has at least one connecting piece (32, 44, 60) that extends from a part of the envelope-fixed section (20) connectable to the structure-fixed section (18) to the at least one envelope (14, 42).

8. Duct system (2, 40) according to Claim 7, wherein the connecting piece (32, 44, 60) is formed from a flexible, fabric-like material, so that the at least one envelope (14, 42) can be fastened and tensioned at a distance from the structure-fixed section (18) in the mounted state.

9. Duct system (2, 40) according to one of the preceding claims, wherein the fabric-like material comprises a woven textile or textile-like material.

10. Duct system (2, 40) according to one of the preceding claims, wherein the at least one envelope (14, 42) has thermal insulation (38).

11. Duct system (2, 40) according to one of the preceding claims, further comprising at least one connection piece (62) that can be airtightly connected to an opening (63) in a side surface (17) of the at least one envelope (14, 42) and extends transversely to a main extension axis of the at least one envelope (14, 42).

12. Aircraft (66), comprising a fuselage (6) with a structure (8, 12) and at least one duct system (2, 40) according to one of the preceding claims, wherein the at least one envelope (14, 42) is fastened to the structure (8, 12) of the aircraft (66).

13. Aircraft (66) according to Claim 12, wherein the at least one envelope (14, 42) forms an air duct of an air conditioning system.

## Revendications

1. Système de conduite (2, 40) pour un système de transport d'air dans un fuselage (6) d'un aéronef (66), comprenant:
- au moins une enveloppe (14, 42) souple, résistante à la traction, en forme de tube et étanche à l'air, faite d'un matériau de type tissu pour la conduction d'air, et
- au moins un dispositif de fixation (16) pour fixer ladite au moins une enveloppe (14, 42) à une structure (8, 12) du fuselage (6),
- le dispositif de fixation (16) comprenant une section (18) fixe à la structure, pouvant être connectée à la structure (8, 12) du fuselage (6), et une section (20) fixe à l'enveloppe, pouvant être connectée à ladite au moins une enveloppe (14, 42),
- la section (18) fixe à la structure ayant une section transversale intérieure (26) qui est formée de manière à correspondre au moins partiellement à une section transversale extérieure (27) de la section (20) fixe à l'enveloppe, de sorte que la section transversale extérieure (27) peut être au moins partiellement insérée ou emboîtée dans la section transversale intérieure (26), et
- le système de conduite (2, 40) étant conçu pour acheminer de l'air d'une source d'air sous pression à travers un espace intérieur (15) de ladite au moins une enveloppe (14, 42).

2. Système de conduite (2, 40) selon la revendication 1, comprenant plusieurs enveloppes (14, 42) qui sont connectées les unes aux autres par des surfaces latérales (17) et qui ont chacune un espace intérieur (15) séparé.

3. Système de conduite (2, 40) selon la revendication 1 ou 2, dans lequel la section (20) fixe à l'enveloppe comprend au moins un jonc (28) qui peut être retenu dans la section (18) fixe à la structure.

4. Système de conduite (2, 40) selon l'une des revendications précédentes, dans lequel la section (18) fixe à la structure comprend plusieurs supports (22, 46) qui sont conçus pour saisir la section (20) fixe à l'enveloppe au moins partiellement comme une pince.

5. Système de conduite (2, 40) selon l'une des revendications précédentes, dans lequel la section (18) fixe à la structure comprend plusieurs supports (22, 46) qui sont réalisés comme des douilles allongées et qui sont fendus latéralement dans le sens de la longueur.

6. Système de conduite (2, 40) selon la revendication 5, dans lequel au moins l'un des supports (22, 46) présente une zone d'entrée en forme d'entonnoir (52) pour l'insertion d'un jonc (28).

7. Système de conduite (2, 40) selon l'une des revendications précédentes, dans lequel ladite au moins une section (20) fixe à l'enveloppe comprend au moins une pièce de connexion (32, 44, 60) qui s'étend d'une partie de la section (20) fixe à l'enveloppe pouvant être connectée à la section (18) fixe à la structure vers ladite au moins une enveloppe (14, 42).

8. Système de conduite (2, 40) selon la revendication 7, dans lequel la pièce de connexion (32, 44, 60) est formée d'un matériau souple de type tissu, de sorte que ladite au moins une enveloppe (14, 42) peut être fixée et tendue à une certaine distance de la section (18) fixe à la structure à l'état monté.

9. Système de conduite (2, 40) selon l'une des revendications précédentes, dans lequel le matériau de type tissu comprend un textile tissé ou un matériau de type textile.

10. Système de conduite (2, 40) selon l'une des revendications précédentes, dans lequel ladite au moins une enveloppe (14, 42) présente une isolation thermique (38).

11. Système de conduite (2, 40) selon l'une des revendications précédentes, comprenant en outre au moins une pièce de raccordement (62) qui peut être connectée de manière étanche à l'air à une ouverture (63) dans une surface latérale (17) de ladite au moins une enveloppe (14, 42) et s'étend transversalement à un axe d'extension principal de ladite au moins une enveloppe (14, 42).

12. Aéronef (66), comprenant un fuselage (6) avec une structure (8, 12) et au moins un système de conduite (2, 40) selon l'une des revendications précédentes, ladite au moins une enveloppe (14, 42) étant fixée à la structure (8, 12) de l'aéronef (66).

13. Aéronef (66) selon la revendication 12, dans lequel ladite au moins une enveloppe (14, 42) forme une conduite d'air d'un système de climatisation.
